# EUROPÄISCHE PATENTANMELDUNG

(11) **EP 1 479 515 A2**
(43) Veröffentlichungstag der Anmeldung: **24.11.2004**
(21) Anmeldenummer: 04011525.5
(22) Anmeldetag: 14.05.2004
(51) Int. Cl.: B32B 31/00

(54) **Verfahren zum Herstellen einer gewölbten Scheibenanordnung für ein Fahrzeug**

(30) Priorität: 22.05.2003 DE 10323234
(71) Anmelder: Webasto AG, 82131 Stockdorf (DE)
(72) Erfinder: Teschner, Helmut, 86899 Landsberg (DE); Böhm, Hubert, 86926 Greifenberg (DE); Erbeck, Gerit, 85467 Niederneuching (DE)
(74) Vertreter: Bedenbecker, Markus

(57) **Zusammenfassung**

Die vorliegende Erfindung betrifft ein Verfahren zum Herstellen einer gewölbten Scheibenanordnung für ein Fahrzeug, wobei mittels einer flexiblen Matrize (24) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren. Bei der Matrize (24) handelt es sich um Dünnglas oder eine Metallfolie mit einer Schichtdicke von jeweils weniger als 1 mm.

## Beschreibung

Die vorliegende Erfindung betrifft ein Verfahren zum Herstellen einer gewölbten Scheibenanordnung für ein Fahrzeug gemäß dem Oberbegriff von Anspruch 1.

Ein solches gattungsgemäßes Verfahren ist in der US 5,622,580 beschrieben, wo eine gewölbte Glasscheibe für ein Fahrzeugdach mittels einer Klebeschicht aus Polyvenylbutyral mit einer Antireißschicht aus Polyester oder Polycarbonat laminiert wird, indem in einem autoklaven Prozess die Antireißschicht mittels einer starren Matrize aus Polycarbonat oder Metall oder einer flexiblen Matrize aus einem Glasfasermaterial auf die Glasscheibe gedrückt wird und anschließend die Schichtfolge evakuiert und mittels einer Druck- und Wärmebehandlung laminiert wird. Nach erfolgter Lamination wird die Matrize, die nicht auf der Antireißschicht anhaftet, wieder entfernt.

Ein ähnliches Verfahren ist in der US 3,806,387 beschrieben, wo eine Glasscheibe für ein Fahrzeug hergestellt wird, indem eine Klebeschicht und eine transparente Kunststoffschicht mittels einer die gleiche Form wie die Glasscheibe aufweisenden Glasmatrize auf eine gekrümmte Glasscheibe aufgedrückt werden, um eine Schichtfolge zu bilden, die in einem Autoklaven auf die Glasscheibe auflaminiert wird. Nach erfolgter Lamination wird die Glasmatrize wieder entfernt. Die Glasmatrize weist eine Dicke von 3 mm auf und ist vorgeformt, d.h. starr.

In der US 3,960,627 ist ein weiteres gattungsgemäßes Verfahren beschrieben, wobei hier eine elastische Matrize aus Silikongummi mit einer Dicke von 1-3 mm verwendet wird, um eine Kunststoffschicht auf eine Glasscheibe aufzudrücken. Der Laminationsprozess wird dann in einem Vakuumsack in einem Autoklaven ausgeführt, wobei ein weiches Dämpfungsmaterial zwischen der Matrize und der Innenwand des Vakuumsacks eingefügt wird.

In der US 5,631,089 ist ein Verfahren zum Herstellen einer ebenen Glasscheibe beschrieben, wobei ein Polymerfilm mittels einer Klebstoffschicht auf eine ebene Glasscheibe auflaminiert wird, indem der Polymerfilm zunächst auf einer Seite mit einer relativ weichen Polyethylenschicht versehen wird und dann der Schichtverbund mittels einer Matrize, welche gegen die Polyethylenschicht drückt, auf die Glasscheibe gedrückt wird. Anschließend erfolgt die Lamination in einem Vakuumsack in einem Autoklaven bei einem Druck von 2-30 atm. Nach erfolgter Lamination werden zunächst die Matrize und dann die Polyethylenschicht entfernt. Die Polyethylenschicht dient dazu, Verunreinigungsteilchen auf der Oberfläche des Polymerfilms einzubetten und beim Entfernen der Polyethylenschicht mitzunehmen. Bei einer alternativen Ausführungsform wird die Polyethylenschicht nicht auf den Polymerfilm, sondern auf die dem Schichtverbund zugewandte Seite der Matrize aufgebracht.

Es ist Aufgabe der vorliegenden Erfindung, ein Verfahren zum Herstellen einer gewölbten Scheibenanordnung mit einem Folienverbund für ein Fahrzeug zu schaffen, bei welchem auf einfache und kostengünstige Weise eine gute optische Qualität des Laminats erzielt werden kann.

Die Aufgabe wird erfindungsgemäß gelöst durch ein Verfahren gemäß Anspruch 1. Mittels der Verwendung von Dünnglas oder einer Metallfolie, jeweils mit einer Schichtdicke von weniger als 1 mm, als Matrize kann auf einfache und kostengünstige Weise eine gute optische Qualität des Laminats erzielt werden.

Ein weiteres erfindungsgemäßes Verfahren ist in Anspruch 27 definiert. Dadurch, dass die Wärmebehandlung in einem Laminator ausgeführt wird, kann auf einfache Weise eine gute optische Qualität des Laminats erzielt werden, insbesondere wenn eine Matrize aus Dünnglas oder einer Metallfolie mit einer Schichtdicke von jeweils weniger als 1 mm verwendet wird.

Ein weiteres erfindungsgemäßes Verfahren ist in Anspruch 30 definiert. Dadurch, dass die Kunststoffolie während der Wärmebehandlung gedehnt wird, wobei die Kraftbeaufschlagung im Randbereich der Kunststoffolie erfolgt, kann sichergestellt werden, dass eine Straffung der zu laminierenden Kunststoffolie beim Anpressen der Kunststoffolie mittels der Matrize erfolgen kann, um eine gute optische Qualität des Laminats zu erzielen. Vorzugsweise wird zu diesem Zweck die Kunststoffolie vor der Wärmebehandlung um die Matrize herum mit ihren Rändern eingespannt, wobei eine Dehnvorrichtung vorgesehen ist, welche die Folie in einem Bereich nahe des Randbereichs aufgrund der Druckabsenkung in eine Ausnehmung in der Matrize drückt, um die Folie vor der Wärmebehandlung vorzuspannen.

Ein weiteres erfindungsgemäßes Verfahren ist in Anspruch 32 definiert, wobei die Lamination zweistufig erfolgt, nämlich zuerst mit einer Matrize mit strukturierter Oberfläche, um ein gutes Ausströmen der Luft zwischen der Matrize und dem Folienverbund bei der Evakuierung zu ermöglichen, und anschließend erfolgt die endgültige Lamination mit einer zweiten Matrize mit glatter Oberfläche, wobei die von der strukturierten Matrize in den Folienverbund eingeprägten Strukturen mittels der zweiten Matrize wieder entfernt werden. Auf diese Weise können Lufteinschlüsse vermieden werden, ohne dass die optische Qualität des Laminats leiden müßte.

Eine alternative erfindungsgemäße Lösung der letztgenannten Aufgabe ist in Anspruch 37 definiert, wobei eine nicht haftende, mit einer Oberflächenmikrostruktur versehene Schicht zwischen den Folienverbund und die Matrize eingelegt wird, um den Luftaustritt aus dem Bereich zwischen der Matrize und dem Folienverbund zu erleichtern, wobei jedoch die Oberflächenmikrostruktur der eingelegten Schicht so fein ist, dass sie sich nicht auf dem Folienverbund abzeichnet. Als Materialien kommen dabei insbesondere harte aber feine textile Gewebe, z.B. harte Seide, in Frage.

In Anspruch 33 ist ein erfindungsgemäßes Verfahren definiert, bei welchem die Umfangsränder des Folienverbunds und der Matrize vor der Druckverringerung mit Glasvliesstreifen abgedeckt werden, um den Luftaustritt zwischen der Scheibe und der Kunststoffolie zu erleichtern. Dies stellt eine einfache Maßnahme dar, um den Einschluss von Luftblasen zwischen der Scheibe und der Kunststoffolie zu vermeiden.

In Anspruch 34 ist ein weiteres erfindungsgemäßes Verfahren definiert, bei welchem, als Variante zu den bisher beschriebenen Lösungen, die Kunststoffolie vor der Druckabsenkung und Lamination auf die Matrize aufgebracht wird. Auf diese Weise kann gegebenenfalls das Handling der Kunststoffolie erleichtert werden; insbesondere kann dadurch für eine Dehnung der Kunststoffolie beim Laminationsprozess gesorgt werden.

Ein weiteres erfindungsgemäßes Verfahren ist in Anspruch 35 definiert, wobei die Kunststoffolie vor der Lamination mit einer Kaschierschicht versehen wird, die nach der Lamination abgezogen werden kann. Dadurch können gegebenenfalls auf einfache Weise Verunreinigungsteilchen von der Kunststoffolie fern gehalten und entfernt werden.

Ein alternatives erfindungsgemäßes Verfahren, welches ebenfalls dieses letztgenannte Problem löst, ist in Anspruch 36 definiert, wobei die Matrize, an der der Kunststoffolie zugewandten Seite mit einer elastischen Beschichtung versehen ist. Auch auf diese Weise können gegebenenfalls Verunreinigungsteilchen von der Kunststoffolie ferngehalten und entfernt werden.

Bei der Lösung gemäß Anspruch 1 wird vorzugsweise alkalifreies Dünnglas verwendet, welches vorzugsweise vor der Verwendung als Matrize chemisch gehärtet wird. Um eine elektrostatische Anziehung von Staubteilchen zu verhindern, kann es sich bei der Matrize um Dünnglas handeln, welches vor der Verwendung als Matrize auf der der Kunststoffolie zugewandten Seite mit einer Metallschicht beschichtet wird, welche elektrisch geerdet werden kann. Um ein Anhaften der Matrize auf der Kunststoffolie zu verhindern, so dass eine laterale Verschiebung der Matrize auf der Kunststoffolie ermöglicht wird, kann es sich bei der Matrize um Dünnglas handeln, welches vor der Verwendung als Matrize auf der der Kunststoffolie zugewandten Seite mit einer sogenannten Nanobeschichtung (sog. "Lotuseffekt"-Beschichtung) versehen wird.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig.1: eine schematische Schnittansicht einer auf einer Unterform platzierten Scheibe mit aufgelegten Folien und aufgelegter Matrize in einem Laminator vor dem Schließen des Laminators;
- Fig. 2: eine Ansicht wie Fig. 1, wobei der Laminator im geschlossenen Zustand gezeigt ist;
- Fig. 3: eine vergrößerte Darstellung des linken Randbereichs der Scheibe mit aufgelegten Folien von Fig. 1, wobei eine im Vergleich zu Fig. 1 abgewandelte Ausführungsform gezeigt ist;
- Fig. 4: eine Ansicht wie Fig. 1, wobei eine gegenüber Fig. 1 abgewandelte Ausführungsform der Matrize vor dem Auflegen auf den Folienstapel gezeigt ist;
- Fig. 5: eine Ansicht wie Fig. 4, wobei eine bezüglich Fig. 4 abgewandelte Ausführungsform des Folienstapels gezeigt ist;
- Fig. 6: eine Ansicht wie Fig. 4 und 5, wobei eine bezüglich Fig. 4 und 5 abgewandelte Ausführungsform der Matrize und des Folienstapels gezeigt ist;
- Fig. 7: eine Ansicht wie Fig. 1, wobei eine bezüglich Fig. 1 abgewandelte Ausführungsform gezeigt ist;

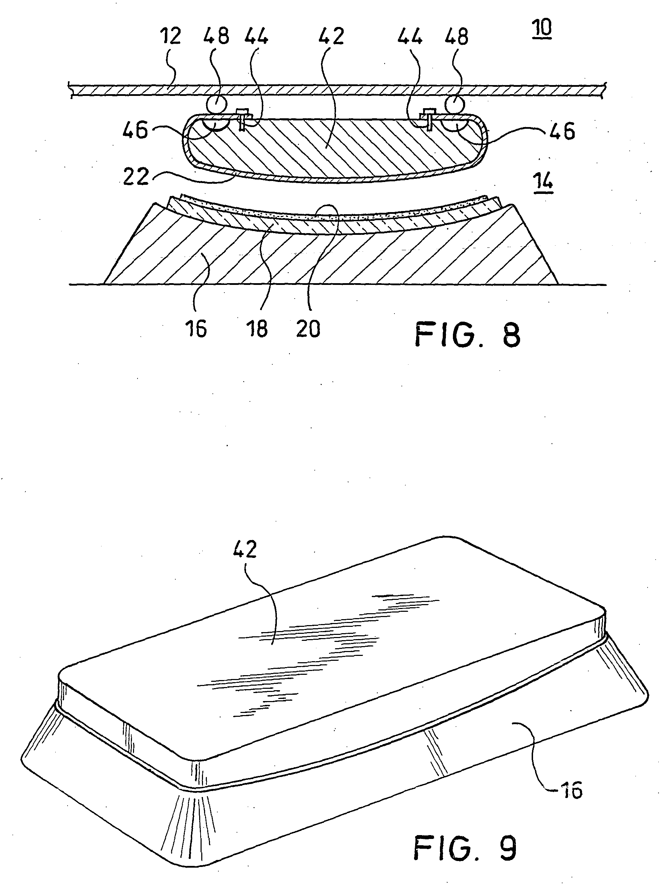

- Fig. 8: eine Ansicht wie Fig. 4, wobei statt einer flexiblen Matrize eine starre Oberform verwendet wird, auf welche die Kunststoffolie aufgespannt ist;
- Fig.9: eine schematische perspektivische Ansicht eines Beispiels für die Verwendung einer starren Oberform statt einer flexiblen Matrize;
- Fig. 10: eine Ansicht wie Fig. 1, wobei auf die Scheibe aufgebrachte elektrische Funktionselemente mit einlaminiert werden; und
- Fig. 11: eine alternative Ausführungsform zu Fig. 10, wobei eine elektrische Funktionsfolie mit einlaminiert wird.

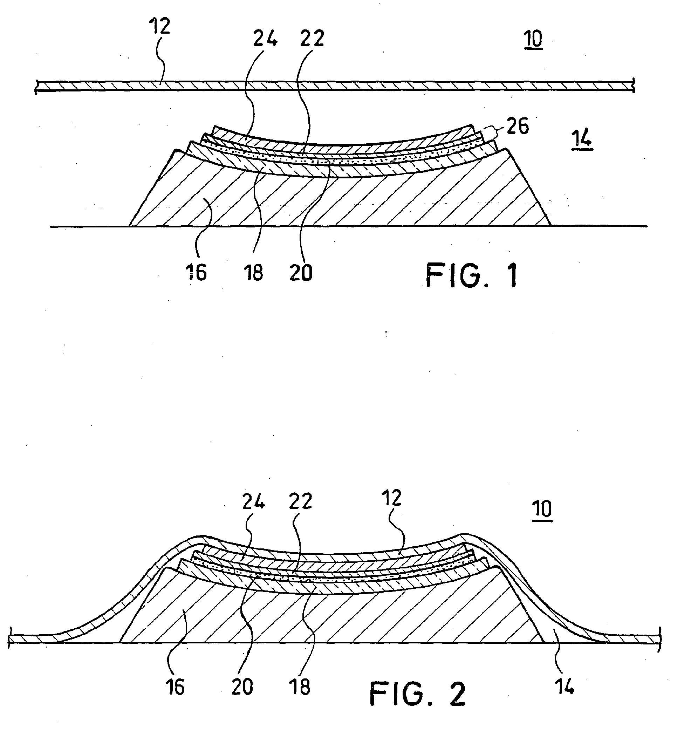

In Fig. 1 ist ein Laminator gezeigt, der eine obere Kammer 10 und eine davon mittels einer Membran 12 getrennte untere Kammer 14 aufweist. In der unteren Kammer 14 ist eine konkave Unterform 16 angeordnet, welche vorzugsweise aus Metall gefertigt ist. In die konvexe Vertiefung der Unterform 16 ist eine gewölbte Glasscheibe 18 eingelegt, auf welche wiederum eine Klebstofflage 20, bei der es sich vorzugsweise um eine Schmelzklebefolie handelt, aufgebracht ist. Die Schmelzklebefolie 20 dient dazu, eine Kunststoffdeckfolie 22, welche auf die Klebstoffschicht 20 aufgelegt ist, mit der Scheibe 18 zu verbinden. Auf die Deckfolie 22 ist wiederum eine flexible Matrize 24 aufgelegt, die zumindest einen mittleren Bereich der Scheibe 18 bzw. des von den Folien 20 und 22 gebildeten Folienverbunds 26 abdeckt.

Die Unterform 16 kann beheizbar sein, um eine gute und definierte Temperatursteuerung des Laminationsprozesses zu erzielen. Die Wölbung der Unterform 16 kann der Wölbung der Glasscheibe 18 entsprechen oder weniger stark als diejenige der Scheibe 18 sein.

Die Glasscheibe 18 ist vorzugsweise sphärisch oder doppelzylindrisch gewölbt und ist aus Einscheibensicherheitsglas hergestellt. Im laminierten Zustand kann die Scheibenanordnung dann beispielsweise als transparentes Dachelement, beispielsweise als verstellbarer transparenter Deckel eines öffnungsfähigen Fahrzeugdaches oder als Glasfestelement, oder als Frontscheibe, Heckscheibe oder Seitenscheibe eines Fahrzeugs eingesetzt werden.

Die Klebeschicht 18 ist vorzugsweise als Schmelzklebefolie aus Polyurethan (PU), PVB oder EVA ausgebildet.

Die Deckfolie 24 kann beispielsweise aus PET oder Polycarbonat (PC) oder PMMA gefertigt sein und kann beispielsweise dazu dienen, einen Splitterschutz im Falle des Bruchs der Glasscheibe 18, oder einen Schutz von an der Scheibe vorgesehenen elektrischen Funktionselementen oder Funktionsschichten vor mechanischer Beanspruchung (z.B. Abscheren) und Umwelteinflüssen zu realisieren.

Sowohl die Scheibe 18 als auch der Folienverbund 26 sind vorzugsweise transparent bzw. transluzent ausgebildet.

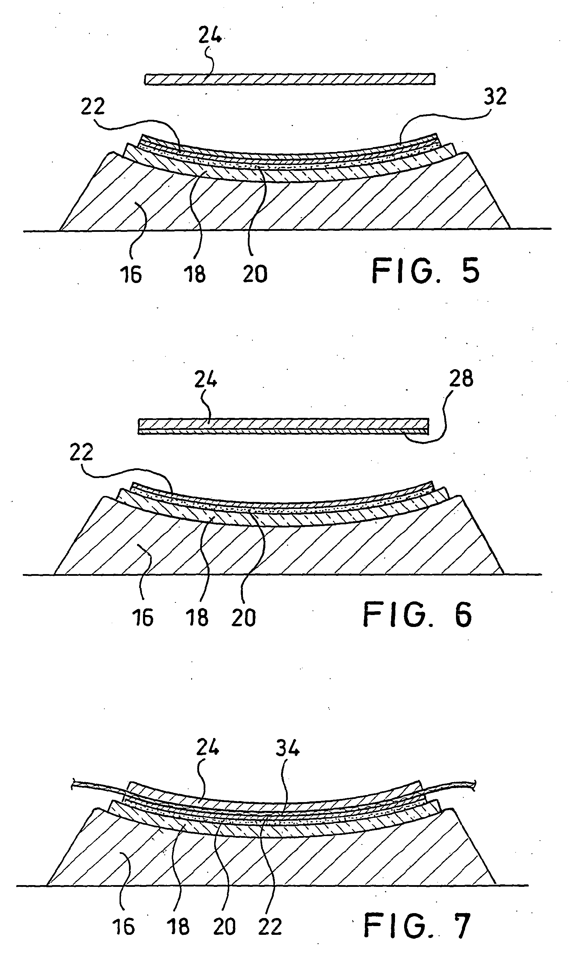

Bei der Matrize 24 handelt es sich um Dünnglas oder eine Metallfolie, jeweils mit einer Schichtdicke von weniger als 1 mm. Falls es sich um Dünnglas handelt, wird vorzugsweise alkalifreies Dünnglas verwendet, welches chemisch gehärtet sein kann, um eine ausreichende Flexibilität der Matrize mit einer ausreichenden Härte zu vereinen. Insbesondere kann es sich bei dem Dünnglas um sogenanntes Displayglas handeln, welches üblicherweise bei elektronischen Anzeigen verwendet wird. Die dem Folienverbund 26 zugewandte Seite der Dünnglasmatrize kann mit einer Metallschicht beschichtet sein, welche elektrisch geerdet werden kann, um eine elektrostatische Anziehung von Staubteilchen vor dem Aufdrücken auf den Folienverbund 26 zu verhindern. Eine solchermaßen beschichtete Matrize 24 ist in Fig. 6 schematisch gezeigt, wobei die Beschichtung das Bezugszeichen 28 trägt. Bei der Beschichtung 28 der Matrize 24 kann es sich jedoch auch um eine sogenannte Nano-Beschichtung handeln, welche ein Anhaften der Matrize 24 an dem Folienverbund 26 während des Laminationsvorgangs verhindern soll, so dass eine laterale Verschiebung der Matrize 24 auf dem Folienverbund 26 während des Laminationsvorgangs möglich ist. Solche als Antihaftbeschichtungen wirkende Beschichtungen werden auch als "Lotuseffekt"-Beschichtung bezeichnet und sind an sich bekannt.

Wenn die Matrize 24 als Metallfolie ausgebildet ist, ist sie vorzugsweise hochglanzpoliert, um eine entsprechende Oberflächenqualität des Folienverbunds 26 nach der Lamination zu gewährleisten. Als Materialien kommen beispielsweise Aluminium, Messing oder Federstahl in Frage. Ferner kann die dem Folienverbund 26 zugewandte Seite der Metallfolie in geeigneter Weise beschichtet, z.B. glanzvernickelt, sein.

Um den Laminationsvorgang auszuführen, wird ausgehend von der in Fig. 1 gezeigten Stellung, in welcher die untere Kammer 14 des Laminators noch nicht mittels der Membran 12 luftdicht verschlossen ist, die Membran 12 abgesenkt, bis die untere Kammer 14 luftdicht abgeschlossen ist. Anschließend werden sowohl die obere Kammer 12 als auch die untere Kammer 14 evakuiert. Dabei soll insbesondere die Luft zwischen dem Folienverbund 26 und der Scheibe 18 sowie zwischen der Matrize 24 und dem Folienverbund 26 vollständig entfernt werden, da verbleibende Lufteinschlüsse sehr störend auf das optische Erscheinungsbild des Laminats wirken. Bei dem verwendeten Unterdruck kann es sich beispielsweise um ein Feinvakuum von beispielsweise etwa 50 mbar handeln. Nachfolgend werden noch weitere Maßnahmen beschrieben, um diesen Luftaustritt möglichst wirkungsvoll zu erzielen.

Wenn ein hinreichendes Vakuum in der unteren Kammer 14 erreicht worden ist, wird die obere Kammer 10 belüftet, d.h. auf Atmosphärendruck gebracht, während die untere Kammer 14 weiter evakuiert wird. Auf diese Weise wird ein Überdruck von etwa 1 bar bezüglich der unteren Kammer 14 erzielt, so dass die Membran 12 mit diesem Druck auf die Oberseite der Matrize 24 drückt, wodurch die Matrize 24 mit ihrer Unterseite auf den Folienverbund 26 gedrückt wird. Zugleich wird dann mit dem eigentlichen Laminationsvorgang begonnen, indem der Folienverbund 26 auf eine erhöhte Temperatur aufgeheizt wird. Dies kann beispielsweise mittels der beheizbaren Unterform 16 erfolgen. Falls es sich bei der Schmelzklebefolie 20 beispielsweise um Polyurethan handelt, ist eine Temperatur von etwa 95 bis 150°C zweckmäßig, wobei die Aufheizphase etwa 15 Minuten dauern kann und dann das Temperaturniveau für 30 - 45 Minuten gehalten wird.

Anschließend wird der Folienverbund 26 auf Raumtemperatur abgekühlt, worauf dann die untere Kammer 14 belüftet werden kann, um die mit dem Folienverbund 26 laminierte Glasscheibe 18 aus dem Laminator zu entnehmen. Die Matrize 24 wird dabei nach oben abgezogen.

Bedingt durch ihre Flexibilität legt sich die Laminatormembran 12 während des Laminationsvorgangs an die Matrize 24 an, welche wiederum aufgrund ihrer Flexibilität im wesentlichen die Wölbung der vorgewölbten Glasscheibe 18 annimmt. Die Glasscheibe 18 wiederum wird durch die entsprechende konkave Vertiefung in der unteren Form 16 entsprechend in Form gehalten. Die Matrize 24 sorgt für die nötige Verteilung Anpressdrucks über die gesamte Fläche, so dass weder Beulen noch Dellen auftreten können und dass durch eventuelle einlaminierte Element oder elektrische Funktionselemente hervorgerufene Erhebungen bzw. Unregelmäßigkeiten eingeebnet werden können.. Auf diese Weise kann eine Scheibenanordnung hergestellt werden, bei welcher der laminierte Folienverbund 26 eine optische verzerrungsfreie Durchsicht mit hoher Oberflächengüte gewährleistet.

Falls ein Druck von 1 bar für den Laminationsvorgang nicht ausreichend ist, kann die obere Kammer 10 des Laminators nach dem Belüften noch mit Druckluft aus einem Kompressor mit einem Druck von bis zu 5 bar beaufschlagt werden, wodurch die Matrize 24 dann entsprechend mit einem Druck zwischen 1 und 5bar auf den Folienverbund 26 gedrückt wird.

In Fig. 2 ist der Laminator von Fig. 1 während des Laminationsvorgangs gezeigt, wenn die obere Kammer 10 belüftet ist, während die untere Kammer 14 evakuiert ist.

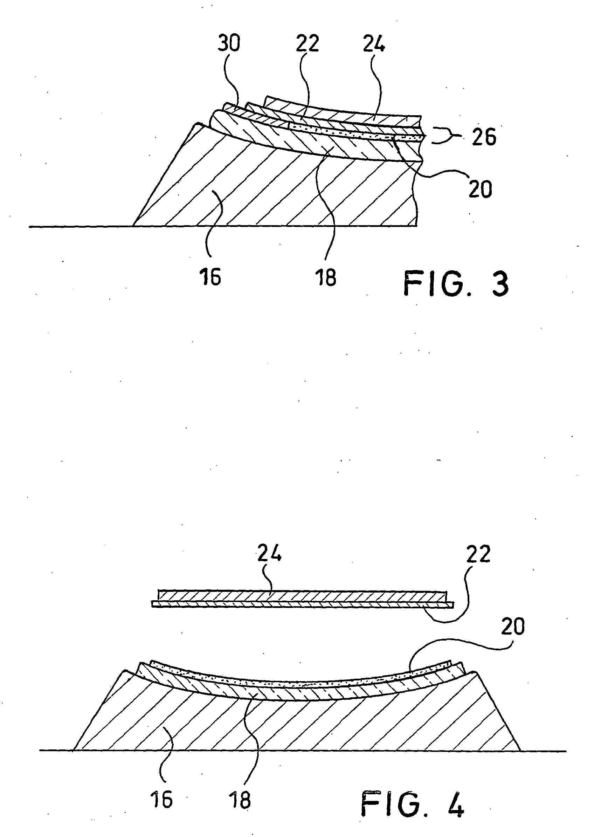

In Fig. 3 ist eine Maßnahme gezeigt, um den Luftaustritt bei der Evakuierung zu erleichtern, wobei an den Umfangsrändern des Folienverbunds 26 Glasvliesstreifen auf die Glasscheibe 18 aufgelegt werden, um bei der Evakuierung den Luftaustritt zwischen dem Folienverbund 26 und der Scheibe 18 zu erleichtern und auf die Weise Lufteinschlüsse zu verhindern. Der in Fig. 3 gezeigte Glasvliesstreifen ist mit dem Bezugszeichen 30 bezeichnet. Diese Lösung ist insbesondere dann zweckmäßig, wenn der Laminationsvorgang nicht in einem Laminator, sondern statt dessen in einem Umlaufofen oder einem Autoklaven ausgeführt wird, wobei in diesem Fall keine Unterform verwendet wird, sondern die Glasscheibe 18 mit dem Folienverbund 26 und der Matrize 24 in einen Vakuumsack gelegt wird, welcher anschließend vakuumdicht verschlossen und abgepumpt wird. Der Vakuumsack wird dann im abgepumpten Zustand im Autoklaven oder im Umlaufofen erwärmt, beispielsweise auf 95°C bis 150°C, und im Falle der Verwendung eines Autoklaven mit einem Druck von beispielsweise 6 bis 12 bar beaufschlagt, um den Laminationsprozess auszuführen.

Statt eines Vakuumsacks kann auch ein sogenannter Vakuumlippenring verwendet werden, wobei es sich hier um einen Schlauch handelt, der auf der Innenseite einen Schlitz aufweist und auf die Glasscheibe mit dem Folienverbund aufgezogen wird, wobei die Lippen für eine Vakuumdichtigkeit sorgen, so dass der Vakuumklippenring in ähnlicher Weise wie der Vakuumsack abgepumpt werden kann.

In Fig. 4 ist eine bezüglich der Ausführungsform von Fig. 1 abgewandelte Ausführungsform gezeigt, wobei hier auf die Matrize 24 vor Beginn des Evakuierungs- und Laminationsvorgangs die Deckfolie 22 aufgebracht wird. Die Schmelzklebefolie 20 wird dagegen wie in Fig. 1 auf die Glasscheibe 18 aufgelegt. Der Folienverbund 26 wird in diesem Fall erst gebildet, wenn die Matrize 24 mit der Deckfolie 22 auf die Glasscheibe 18 bzw. die Schmelzklebefolie 20 aufgelegt wird.

In Fig. 5 ist eine weitere Abwandlung der Ausführungsform von Fig. 1 gezeigt, wobei hier, wie in Fig. 1 die Deckfolie 20 auf die Glasscheibe 18 aufgelegte Schmelzklebefolie 22 aufgelegt wird, bevor die Matrize 24 auf den Folienverbund 26 aufgelegt wird, jedoch ist die zur Matrize 24 hinweisende Seite der Deckfolie 22 mit einer Kaschierschicht 32 versehen, welche nach erfolgter Lamination nach dem Abnehmen der Matrize 24 von dem Folienverbund 26 abgezogen werden kann. Mittels der Kaschierschicht 32 kann sicher gestellt werden, dass keine Verunreinigungsteilchen in die Deckfolie 22 einlaminiert werden, da solche Verunreinigungsteilchen statt dessen der Kaschierschicht 32 aufgenommen werden und nach erfolgter Lamination zusammen mit dieser entfernt werden. Auf diese Weise können Beeinträchtigungen der Oberfläche des Folienverbunds 26 verhindert werden.

In Fig. 6 ist eine zum Teil bereits erwähnte Variante zur Ausführungsform von Fig. 1 dargestellt, bei welcher die Matrize 24 an der dem Folienverbund 26 zugewandten Seite mit einer Beschichtung 28 versehen ist. Dabei kann es sich, wie bereits erwähnt, um eine metallische Beschichtung zwecks elektrischer Erdung der Matrize 24 oder um eine Antihaftbeschichtung handeln. Ferner kann es sich jedoch auch um eine elastische Beschichtung handeln. Eine solche elastische Beschichtung 28 kann nicht nur für Dünnglasmatrizen, sondern auch für Metallfolienmatrizen oder auch für starre Matrizen verwendet werden.

In Fig. 7 ist eine Maßnahme gezeigt, mittels welcher Lufteinschlüsse zwischen der Matrize 24 und dem Folienverbund 26 vermieden werden können. Dabei wird, bevor die Matrize 24 aufgelegt wird, eine mit einer Oberflächenmikrostruktur versehene Schicht 34 auf den Folienverbund 26 aufgelegt. Auf diese Weise kommt die Schicht 34 zwischen der Matrize 24 und dem Folienverbund 26 zu liegen. Die Oberflächenmikrostruktur ist dabei so fein, dass sie sich beim Laminieren nicht auf der Deckfolie 22 abzeichnet, jedoch beim Evakuieren einen verbesserten Luftaustritt zwischen der Matrize 24 und dem Folienverbund 26 ermöglicht. Bei der Schicht 34 handelt es sich vorzugsweise um ein nicht haftendes hartes Gewebe, z.B. harte Seide. Nach Beendigung des Laminationsvorgangs kann die Schicht 34 zusammen mit der Matrize 24 von dem Folienverbund 26 abgenommen werden.

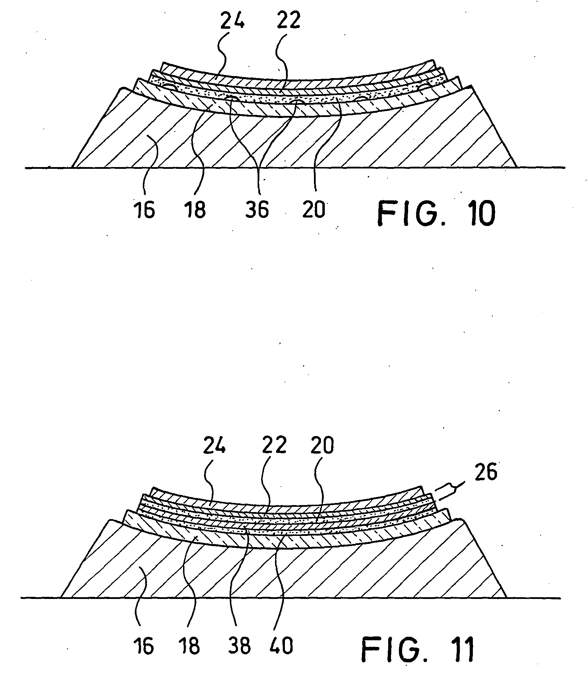

In Fig. 10 ist eine bezüglich der Ausführungsform in Fig. 1 abgewandelte Ausführungsform gezeigt, bei welcher vor dem Auflegen des Folienverbunds 26 auf die Glasscheibe 18 die dem Folienverbund 26 zugewandte Seite der Glasscheibe 18 mit elektrischen Funktionselementen 36 versehen wird, die vorzugsweise direkt auf die Glasscheibe 18 appliziert werden. Dabei kann es sich insbesondere um Leuchtmittel, wie beispielsweise Leuchtdioden einschließlich einer oder mehrerer mit elektrischen Zuleitungen versehenen Schichten, handeln.

In Fig. 11 ist eine abgewandelte Ausführungsform gezeigt, bei welcher statt elektrischen Funktionselementen 36 eine elektrische Funktionsfolie 38 zwischen dem Folienverbund 26 und der Glasscheibe 18 eingelegt ist. Insbesondere kann es sich dabei um eine LCD- oder SPD-Folie handeln, die bei der Lamination zwischen der Scheibe 18 und dem Folienverbund 26 einlaminiert wird. Zweckmässigerweise kann dabei eine zweite Klebstoffschicht 40 zwischen der Funktionsfolie 38 und der Glasscheibe 18 vorgesehen sein.

Statt mittels einer solchen zusätzlichen Klebstoffschicht 40 eine elektrische Funktionsfolie auf die Scheibe 18 aufzubringen, könnte auch eine entsprechende elektrische Funktionsschicht direkt auf die Oberfläche der Glasscheibe 18 aufgebracht werden.

### Bezugszeichenliste

- 10: obere Laminatorkammer
- 12: Laminatormembran
- 14: untere Laminatorkammer
- 16: Unterform
- 18: Glasscheibe
- 20: Schmelzklebefolie
- 22: Deckfolie
- 24: Matrize
- 26: Folienverbund aus 20 und 22
- 28: Beschichtung auf 24
- 30: Glasvliesstreifen
- 32: Kaschierschicht auf 22
- 34: Gewebeschicht
- 36: elektrische Funktionselemente
- 38: elektrische Funktionsfolie bzw. -schicht
- 40: Schmelzklebefolie
- 42: starre Matrize/Oberform
- 44: Befestigungsmittel
- 46: Vertiefung in 42
- 48: Spannvorrichtung

## Patentansprüche

1. Verfahren zum Herstellen einer gewölbten Scheibenanordnung für ein Fahrzeug, wobei mittels einer flexiblen Matrize (24) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** es sich bei der Matrize (24) um Dünnglas oder eine Metallfolie mit einer Schichtdicke von jeweils weniger als 1 mm handelt.

2. Verfahren nach Anspruch 1, **dadurch gekennzeichnet, dass** es sich bei der Matrize (24) um alkalifreies Dünnglas handelt, welches vor der Verwendung als Matrize chemisch gehärtet wird.

3. Verfahren nach Anspruch 1 oder 2, **dadurch gekennzeichnet, dass** es sich bei der Matrize (24) um Dünnglas handelt, welches vor der Verwendung als Matrize auf der der Kunststoffolie (22) zugewandten Seite mit einer Metallschicht (28) beschichtet wird.

4. Verfahren nach einem der vorhergehenden Ansprüche, **dadurch gekennzeichnet, dass** es sich bei der Matrize (24) um Dünnglas handelt, welches vor der Verwendung als Matrize auf der der Kunststoffolie (22) zugewandten Seite mit einer Nanobeschichtung (28) versehen wird, um ein Anhaften der Matrize an der Kunststoffolie zu verhindern, um eine laterale Verschiebung der Matrize auf der Kunststoffolie zu ermöglichen.

5. Verfahren nach Anspruch 1, **dadurch gekennzeichnet, dass** es sich bei der Matrize (24) um eine Metallfolie handelt, die hochglanzpoliert ist.

6. Verfahren nach Anspruch 1 oder 5, **dadurch gekennzeichnet, dass** es sich bei der Matrize (24) um eine Metallfolie aus Aluminium, Messing oder Federstahl handelt.

7. Verfahren nach Anspruch 1, 5 oder 6, **dadurch gekennzeichnet, dass** es sich bei der Matrize (24) um eine Metallfolie handelt, deren der Kunststoffolie (22) zugewandte Oberfläche beschichtet, insbesondere vernickelt, ist.

8. Verfahren nach einem der vorhergehenden Ansprüche, **dadurch gekennzeichnet, dass** die Kunststoffolie (22) vor der Lamination mit einer Kaschierschicht (32) versehen wird, die nach der Lamination abgezogen werden kann.

9. Verfahren nach einem der vorhergehenden Ansprüche, **dadurch gekennzeichnet, dass** die Matrize (24) an der der Kunststoffolie (22) zugewandten Seite mit einer elastischen Beschichtung (28) versehen ist.

10. Verfahren nach einem der vorhergehenden Ansprüche, **dadurch gekennzeichnet, dass** vor der Druckabsenkung eine nicht haftende, mit einer Oberflächen-Mikrostruktur versehene Schicht (34), insbesondere harte Seide, zwischen die Kunststoffolie (22) und die Matrize (24) eingelegt wird, um die Evakuierung zu erleichtern.

11. Verfahren nach einem der vorhergehenden Ansprüche, **dadurch gekennzeichnet, dass** die Wärmebehandlung in einem Laminator (10, 12, 14) ausgeführt wird.

12. Verfahren nach einem der Ansprüche 1 bis 10, **dadurch gekennzeichnet, dass** die Wärmebehandlung in einem Umlaufofen oder einem Autoklaven ausgeführt wird.

13. Verfahren nach Anspruch 12, **dadurch gekennzeichnet, dass** der Unterdruck mittels eines Vakuumsackes oder eines Vakuumlippenrings erzielt wird.

14. Verfahren nach einem der vorhergehenden Ansprüche, **dadurch gekennzeichnet, dass** der Folienverbund (26) vor der Druckbeaufschlagung mit der von der Kunststoffolie (22) abgewandten Seite der Scheibe (18) in eine Unterform (16) gelegt wird.

15. Verfahren nach Anspruch 14, **dadurch gekennzeichnet, dass** auch die Unterform (16) beheizt ist.

16. Verfahren nach Anspruch 14 oder 15, **dadurch gekennzeichnet, dass** die Unterform (16) eine Wölbung aufweist, die gleich oder geringer als diejenige der Scheibe (18) ist.

17. Verfahren nach einem der vorhergehenden Ansprüche, **dadurch gekennzeichnet, dass** die Matrize (24) eine Wölbung aufweist, die gleich oder stärker als diejenige der Scheibe (18) ist.

18. Verfahren nach einem der vorhergehenden Ansprüche, **dadurch gekennzeichnet, dass** die Kunststoffolie (22) während der Wärmebehandlung gedehnt wird, wobei die Kraftbeaufschlagung im Randbereich der Kunststoffolie erfolgt.

19. Verfahren nach Anspruch 12, **dadurch gekennzeichnet, dass** die Umfangsränder der Matrize (24) und des Folienverbundes (26) vor der Druckverringerung mit Glasvliesstreifen (30) abgedeckt werden, um den Luftaustritt zwischen der Scheibe (18) und der Kunststoffolie (22) zu erleichtern.

20. Verfahren nach einem der vorhergehenden Ansprüche, **dadurch gekennzeichnet, dass** die Kunststoffolie als Deckfolie (22) ausgebildet ist, die als Schutz vor mechanischen Einwirkungen auf die Scheibe (18) bzw. zwischen der Scheibe und der Deckfolie liegende Elemente (36) oder Schichten (38) oder als Splitterschutz bei Beschädigung der Scheibe wirkt.

21. Verfahren nach Anspruch 20, **dadurch gekennzeichnet, dass** die Deckfolie (22) aus PET oder PC gefertigt ist.

22. Verfahren nach Anspruch 20 oder 21, **dadurch gekennzeichnet, dass** zwischen der Deckfolie (22) und der Scheibe (18) eine Klebstoffschicht (20) eingebracht wird, um die Deckfolie an der Scheibe zu befestigen.

23. Verfahren nach Anspruch 22, **dadurch gekennzeichnet, dass** die Klebstoffschicht (20) von einer Schmelzklebefolie, insbesondere aus PU, PVB, oder EVA gebildet wird.

24. Verfahren nach einem der Ansprüche 20 bis 23, **dadurch gekennzeichnet, dass** elektrische Funktionselemente (36), insbesondere Leuchtmittel, oder Funktionsschichten (38) , insbesondere als Leuchtmittel wirkende Funktionsschichten, zwischen der Scheibe (18) und der Deckfolie (22) eingebracht werden.

25. Verfahren nach Anspruch 24, **dadurch gekennzeichnet, dass** die elektrischen Funktionselemente (36) bzw. die Funktionsschichten (38) direkt auf die Scheibe (18) appliziert werden.

26. Verfahren nach einem der Ansprüche 20 bis 23, **dadurch gekennzeichnet, dass** eine Folie (38) mit elektrischer Funktion, insbesondere eine LCD oder SPD-Folie, zwischen der Scheibe (18) und der Deckfolie (22) einlaminiert wird.

27. Verfahren zum Herstellen einer gewölbten Scheibenanordnung für ein Fahrzeug, wobei mittels einer Matrize (24, 42) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** die Wärmebehandlung in einem Laminator (10, 12, 14) ausgeführt wird.

28. Verfahren nach Anspruch 27, **dadurch gekennzeichnet, dass** der Laminator zwei von einer Laminatormembran (12) getrennte Kammern (10, 14) aufweist, wobei der Folienverbund (18, 26) in die erste (14) der beiden Kammern gebracht wird, beide Kammern evakuiert werden und die zweite (10) der beiden Kammern belüftet wird, bevor die Wärmebehandlung beginnt, wobei die Laminatormembran die Matrize (24, 42) auf die Kunststoffolie (22) drückt.

29. Verfahren nach Anspruch 27, **dadurch gekennzeichnet, dass** der Laminator zwei von einer Laminatormembran (12) getrennte Kammern aufweist, wobei der Folienverbund (18, 26) in die erste (14) der beiden Kammern gebracht wird, beide Kammern evakuiert werden und die zweite (10) der beiden Kammern mit einem Druck von 1 bis 5 bar beaufschlagt wird, bevor die Wärmebehandlung beginnt, wobei die Laminatormembran die Matrize (24, 42) auf die Kunststoffolie drückt.

30. Verfahren zum Herstellen einer gewölbten Scheibenanordnung für ein Fahrzeug, wobei mittels einer Matrize (42) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** die Kunststoffolie (22) während der Wärmebehandlung gedehnt wird, wobei die Kraftbeaufschlagung im Randbereich der Kunststoffolie erfolgt.

31. Verfahren nach Anspruch 30, **dadurch gekennzeichnet, dass** die Kunststoffolie (22) vor der Wärmebehandlung um die Matrize (42) herum mit ihren Rändern eingespannt wird, wobei eine Dehnvorrichtung (48) vorgesehen ist, welche die Folie in einem Bereich nahe des Randbereichs aufgrund der Druckabsenkung in eine Ausnehmung (46) in der Matrize drückt, um die Folie vor der Wärmebehandlung vorzuspannen.

32. Verfahren zum Herstellen einer gewölbten Scheibenanordnung für ein Fahrzeug, wobei mittels einer ersten Matrize mit strukturierter Oberfläche eine Kunststoffolie (22) auf eine gewölbte Scheibe (18) aufgedrückt wird, um einen Folienverbund (26) zu bilden, wobei der Folienverbund einer ersten Wärmebehandlung bei einem unterhalb der Atmospärendrucks liegenden Drucks unterzogen wird, und wobei der Folienverbund einer zweiten Wärmebehandlung bei einem unterhalb der Atmosphärendrucks liegenden Drucks unterzogen wird, um die Kunststoffolie auf die Scheibe aufzulaminieren, wobei die Kunststoffolie mittels einer zweiten Matrize mit glatter Oberfläche auf die gewölbte Scheibe aufgedrückt wird.

33. Verfahren zum Herstellen einer gewölbten Scheibenanordnung für ein Fahrzeug, wobei mittels einer Matrize (24) eine Kunststofffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** die Umfangsränder der Matrize (24) und des Folienverbundes (26) vor der Druckverringerung mit Glasvliesstreifen (30) abgedeckt werden, um den Luftaustritt zwischen der Scheibe (18) und der Kunststoffolie (22) zu erleichtern.

34. Verfahren zum Herstellen einer gewölbten Scheibenanordnung für ein Fahrzeug, wobei mittels einer Matrize (24, 42) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** die Kunststoffolie (22) vor der Druckabsenkung und Lamination auf die Matrize (24, 42) aufgebracht wird.

35. Verfahren zum Herstellen einer gewölbten Scheibenanordnung für ein Fahrzeug, wobei mittels einer Matrize (24, 42) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** die Kunststoffolie (22) vor der Lamination mit einer Kaschierschicht (32) versehen wird, die nach der Lamination abgezogen werden kann.

36. Verfahren zum Herstellen einer gewölbten Scheibenanordnung für ein Fahrzeug, wobei mittels einer Matrize (24) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** die Matrize (24) an der der Kunststofffolie (22) zugewandten Seite mit einer elastischen Beschichtung (28) versehen ist.

37. Verfahren zum Herstellen einer gewölbten Scheibenanordnung für ein Fahrzeug, wobei mittels einer Matrize (24) eine Kunststoffolie (22) auf eine gewölbte Glasscheibe (18) aufgedrückt wird, um einen Folienverbund (26) zu bilden, und wobei der Folienverbund einer Wärmebehandlung bei einem unterhalb der Atmosphärendrucks liegenden Drucks unterzogen wird, um die Kunststoffolie auf die Scheibe aufzulaminieren, **dadurch gekennzeichnet, dass** vor der Druckabsenkung eine nicht haftende, mit einer Oberflächen-Mikrostruktur versehene Schicht (34), insbesondere harte Seide, zwischen die Kunststofffolie (22) und die Matrize (24) eingelegt wird, um den Luftaustritt zwischen der Matrize und der Kunststoffolie zu erleichtern, wobei die Oberflächen-Mikrostruktur so fein ist, dass sie sich nicht auf der Kunststoffolie abzeichnet.

38. Verfahren nach einem der Ansprüche 33 bis 37, **dadurch gekennzeichnet, dass** die Matrize (24, 42) als feste Oberform oder als Dünnglas oder Metallfolie mit einer Schichtdicke von jeweils weniger als 1 mm ausgebildet ist.

39. Verfahren nach einem der vorhergehenden Ansprüche, **dadurch gekennzeichnet, dass** die laminierte Glasscheibe (18) als verstellbarer oder karosseriefester Deckel für eine Dachöffnung ausgebildet ist.
